# EUROPEAN PATENT APPLICATION

(11) **EP 4 621 427 A1**
(43) Date of publication of application: **24.09.2025**
(21) Application number: 24223876.4
(22) Date of filing: 31.12.2024
(51) Int. Cl.: G01R 31/367, G01R 31/392

(54) **BATTERY DATA PROCESSING METHOD, ELECTRONIC DEVICE AND STORAGE MEDIUM**

(30) Priority: 21.03.2024 CN 202410332223; 14.05.2024 WO PCT/CN2024/093099
(71) Applicant: Eve Energy Co., Ltd., Huizhou, Guangdong 516006 (CN)
(72) Inventor: DONG, Yapeng, Huizhou, Guangdong, 516006 (CN); LI, Wei, Huizhou, Guangdong, 516006 (CN); KUANG, Haipeng, Huizhou, Guangdong, 516006 (CN); SHANG, Jin, Huizhou, Guangdong, 516006 (CN); XIAO, Peng, Huizhou, Guangdong, 516006 (CN); ZHAO, Hengxi, Huizhou, Guangdong, 516006 (CN)
(74) Representative: Berggren Oy

(57) **Abstract**

Provided are a battery data processing method, an electronic device, and a storage medium. The method includes: obtaining (101) preset life decay curves of a target battery under multiple different life decay types; extracting (103) one curve segment from a respective one of the preset life decay curves; splicing (104) multiple curve segments end-to-end to obtain a predicted life decay curve of the target battery; and determining (105) a predicted life of the target battery based on the predicted life decay curve.

## Description

### TECHNICAL FIELD

The present disclosure relates to the field of battery technology, and in particular to a battery data processing method, an electronic device, and a storage medium.

### BACKGROUND

The prediction of battery life is generally realized through electrochemical principle prediction, genetic algorithm prediction, and so on. Electrochemical principle prediction is based on the properties of battery materials to study the battery degradation mechanism, and battery performance can be optimized by improving the design of battery materials. Genetic algorithm prediction is more efficient as it predicts the battery life by fitting with existing data.

### SUMMARY

The present disclosure provides a battery data processing method. The battery data processing method includes the following.

Preset life decay curves of a target battery under multiple different life decay types are obtained.

One or more predicted operating condition change information of the target battery are obtained. Each predicted operating condition change information includes multiple predicted operating conditions ordered in time sequence, and the multiple predicted operating conditions are in one-to-one correspondence with the multiple life decay types.

For each of the multiple life decay types corresponding to the multiple predicted operating conditions in each predicted operating condition change information, one curve segment is extracted from a respective one of the preset life decay curves corresponding to the life decay type, to obtain multiple curve segments.

The multiple curve segments are sequentially spliced end-to-end based on the ordering of the multiple predicted operating conditions in each predicted operating condition change information to obtain a predicted life decay curve of the target battery for each predicted operating condition change information. The splicing points of any two adjacent curve segments in the predicted life decay curve have the same battery state of health (SOH).

A predicted life of the target battery is determined based on the predicted life decay curve for each predicted operating condition change information.

The present disclosure provides an electronic device. The electronic device includes a processor and a memory storing a computer program. The computer program is configured to be executed by the processor to implement any of the above battery data processing methods.

The present disclosure provides a computer storage medium. The computer storage medium stores a computer program. The computer program is configured to be executed by a processor to implement any of the above battery data processing methods.

### BRIEF DESCRIPTION OF THE DRAWINGS

FIG. 1 is a flowchart of a battery data processing method provided in some embodiments of the present disclosure.
FIG. 2A is a schematic diagram showing a way of extracting curve segments provided in some embodiments of the present disclosure.
FIG. 2B is a schematic diagram showing another way of extracting curve segments provided in some embodiments of the present disclosure.
FIG. 2C is a schematic diagram showing a way of splicing curve segments provided in some embodiments of the present disclosure.
FIG. 3 is a schematic diagram of a predicted life decay curve provided in some embodiments of the present disclosure.
FIG. 4 is a flowchart of a battery data processing method provided in some embodiments of the present disclosure.
FIG. 5 is a flowchart of a battery data processing method provided in some embodiments of the present disclosure.
FIG. 6 is a schematic diagram of an expected life decay curve and an actual life decay curve provided in some embodiments of the present disclosure.
FIG. 7 is a flowchart of a battery data processing method provided in some embodiments of the present disclosure.
FIG. 8 is a schematic diagram of a state-of-health extremum curve provided in some embodiments of the present disclosure.

### DETAILED DESCRIPTION

However, electrochemical principle prediction tends to be more computationally intensive with complex models and large prediction errors. Genetic algorithm prediction is difficult to explain the decay pattern of a battery state of health, and the prediction error is also large.

In view of the above, the present disclosure provides a battery data processing method, an electronic device, and a storage medium.

In the description of this disclosure, the term "plurality" is defined as two or more, unless otherwise expressly specified and limited.

To reduce the prediction error of a battery life, the present disclosure provides a battery data processing method, an electronic device, and a storage medium. Preset life decay curves of a target battery under multiple different life decay types are obtained, and for each of the multiple life decay types corresponding to predicted operating conditions in predicted operating condition change information of the target battery, a curve segment is extracted from a respective one of the preset life decay curves corresponding to each of the multiple life decay types. Then the curve segments of different life decay types are spliced end-to-end to obtain a predicted life decay curve of the target battery, thus obtaining the predicted life of the target battery. Compared with the current battery life prediction scheme, the present disclosure takes into account the decay pattern of the battery state of health under different life decay types and makes the calculation simpler, thus reducing the prediction error of the battery life. Reference is made to the specific descriptions below for specific schemes.

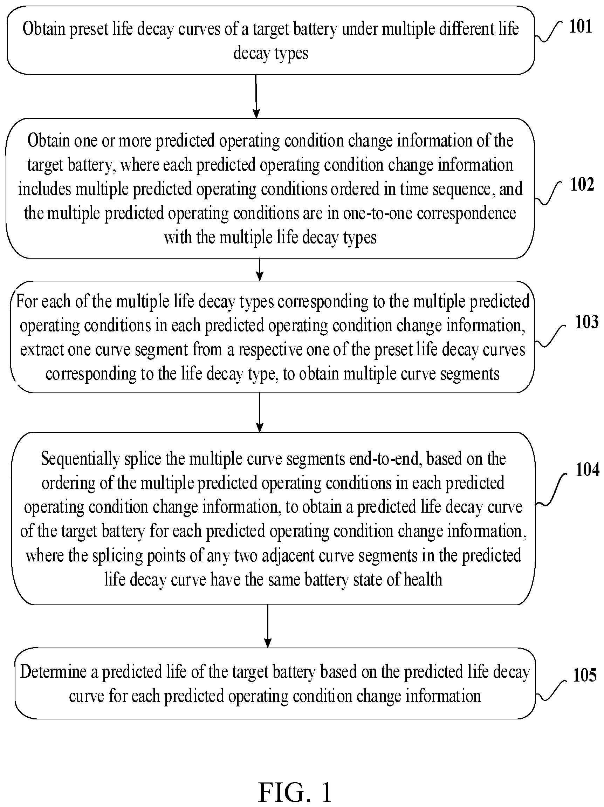

In a first aspect, the present disclosure provides a battery data processing method. For example, referring to FIG. 1, FIG. 1 is a flowchart of a battery data processing method provided in some embodiments of the present disclosure. In FIG. 1, the battery data processing method may include step 101, step 102, step 103, step 104, and step 105.

At step 101, preset life decay curves of a target battery under multiple different life decay types are obtained.

In possible embodiments of the present disclosure, the target battery is generally a battery pack. A prediction of the lifetime of the target battery is required before the target battery leaves the factory or after the target battery leaves the factory and is applied to a specified vehicle as a power battery.

Life decay type refers to the type of state-of-health decay of the target battery, and the life decay types may include, for example, working charge/discharge decay, sleeping resting aging decay, power consumption decay, vibration mechanism decay, and so on. Working charge/discharge decay refers to the state-of-health decay caused by the charging/discharging of the target battery during operation. Sleeping resting aging decay refers to the state-of-health decay caused by the aging process of the target battery while the target battery hibernates. Power consumption decay refers to the state-of-health decay due to the presence of some power-consuming components in the vehicle where the target battery is located, to which power-consuming components the target battery is supplying power at a very low current. Vibration mechanism decay relates to the phenomenon that the vibration of the target battery during movement makes the chemical substances inside the target battery unevenly distributed, thus reducing the performance of the target battery and leading to the decay of the state-of-health of the target battery. In addition, when life decay types are classified, they may be subdivided based on the ambient temperature of the environment in which the target battery is located. For example, the life decay types may include working charge/discharge decay at an ambient temperature of 25°C, sleeping resting aging decay at an ambient temperature of 25°C, working charge/discharge decay at an ambient temperature of 45°C, sleeping resting aging decay at an ambient temperature of 45°C, and the like.

The target battery has a preset life decay curve for each life decay type. The preset life decay curve records how state-of-health of the target battery changes over time under the influence of life decay factors of a corresponding life decay type. Each preset life decay curve may be obtained by pre-testing batteries of the same type as the target battery. Since the state-of-health decay of the target battery under a single life decay type generally conforms to the characteristics of the Arrhenius formula, in the process of obtaining a preset life decay curve through pre-tests, the state-of-health decay in a small period of time may be tested first, and then the Arrhenius formula is used to predict the state-of-health decay in the following period of time. The two state-of-health decay situations are spliced to render the corresponding preset life decay curve, thus reducing the time taken to generate the preset life decay curve.

At step 102, one or more predicted operating condition change information of the target battery are obtained. Each predicted operating condition change information includes multiple predicted operating conditions ordered in time sequence, and the multiple predicted operating conditions are in one-to-one correspondence with the multiple life decay types.

In possible embodiments of the present disclosure, the predicted operating condition change information relates to the predicted changes in operating conditions of the target battery. The predicted operating condition change information includes multiple predicted operating conditions ordered in time sequence. Based on the predicted operating condition change information, it is possible to determine at which time point the target battery may be in a certain predicted operating condition. Multiple predicted operating conditions may be categorized according to different life decay types such that each predicted operating condition may correspond to one life decay type. Predicted operating conditions may include, for example, a predicted operating condition corresponding to working charge/discharge decay, a predicted operating condition corresponding to sleeping resting aging decay, a predicted operating condition corresponding to power consumption decay, a predicted operating condition corresponding to vibration mechanism decay, and the like. Predicted operating conditions may also include, for example, a predicted operating condition corresponding to working charge/discharge decay at an ambient temperature of 25°C, a predicted operating condition corresponding to sleeping resting aging decay at an ambient temperature of 25°C, a predicted operating condition corresponding to working charge/discharge decay at an ambient temperature of 45°C, a predicted operating condition corresponding to sleeping resting aging decay at an ambient temperature of 45°C, and the like.

In possible embodiments of the present disclosure, the predicted operating condition change information of the target battery may be obtained by prediction based on previous historical operating condition change information. For example, the step in which the predicted operating condition change information of the target battery is obtained may include the following sub-steps, in which: Multiple different vehicles of the same model as the vehicle in which the target battery is located are determined, where the vehicle in which the target battery is located refers to a vehicle in which the target battery, which has been shipped from the factory, has been applied, or a vehicle in which the target battery which has not been shipped from the factory but is about to be applied; historical operating condition change information of battery packs of the multiple different vehicles is obtained, where the historical operating condition change information may include multiple historical operating conditions of the battery pack in a corresponding vehicle, which are ordered in time sequence based on historical time points, and each historical operating condition corresponds to one life decay type; statistical analysis is performed on the historical operating condition change information of the battery packs of the multiple different vehicles (that is, based on the obtained historical operating condition change information of the battery packs of the multiple different vehicles, it is analysed to find outwhat distribution patterns the various historical operating conditions in the historical operating condition change information conform to respectively), to determine a preset distribution satisfied by the historical operating condition change information of the battery packs of the multiple different vehicles, where the preset distribution generally belongs to the normal distribution; and random values may be taken according to the preset distribution to obtain the predicted operating condition change information.

At step 103, for each of the multiple life decay types corresponding to the multiple predicted operating conditions in each predicted operating condition change information, one curve segment is extracted from a respective one of the preset life decay curves corresponding to the life decay type, to obtain multiple curve segments.

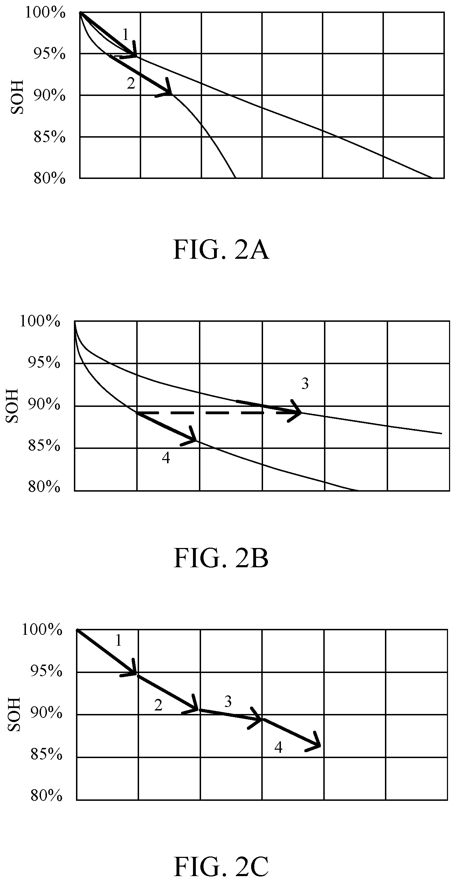

In possible embodiments of the present disclosure, the step in which one curve segment is extracted, for each of the multiple life decay types corresponding to the multiple predicted operating conditions in each predicted operating condition change information, from a respective one of the preset life decay curves corresponding to the life decay type, is performed. For example, the extraction is executed sequentially based on the ordering of the multiple predicted operating conditions in the predicted operating condition change information. For example, as shown in FIG. 2A, curve segment 1 is first extracted from one preset life decay curve, and then curve segment 2 is extracted from another preset life decay curve. For another example, as shown in FIG. 2B, curve segment 3 is first extracted from one preset life decay curve, and then curve segment 4 is extracted from another preset life decay curve. To ensure that adjacent curve segments to be spliced provide the same battery state of health at the splicing points when multiple curve segments are spliced end-to-end in subsequent processes, and thereby to ensure continuity of battery state-of-health decay, extraction positions for extracting curve segments may be set such that the battery state of health at the splicing point of the former curve segment and the battery state of health at the splicing point of the latter curve segment are the same. For example, as shown in FIG. 2C, the splicing point of curve segment 1 and the splicing point of curve segment 2 have the same battery state of health, the splicing point of curve segment 2 and the splicing point of curve segment 3 have the same battery state of health, and the splicing point of curve segment 3 and the splicing point of curve segment 4 have the same battery state of health.

At step 104, the multiple curve segments are sequentially spliced end-to-end based on the ordering of the multiple predicted operating conditions in each predicted operating condition change information to obtain a predicted life decay curve of the target battery for each predicted operating condition change information. The splicing points of any two adjacent curve segments in the predicted life decay curve have the same battery state of health.

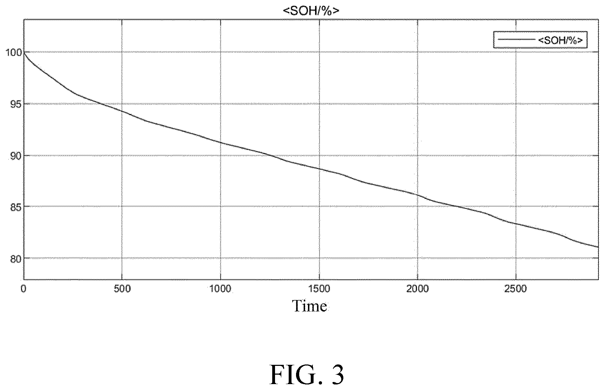

In possible embodiments of the present disclosure, the ordering of the multiple predicted operating conditions in the predicted operating condition change information is used as the splicing order in which the curve segments under the corresponding predicted operating conditions are spliced. The multiple curve segments are sequentially spliced end-to-end based on the splicing order to obtain the predicted life decay curve of the target battery, and an example of the predicted life decay curve is shown in FIG. 3. It can be seen that the predicted life decay curve synthesizes the different decay patterns of the target battery under different life decay types, therefore reducing the prediction error of battery life.

At step 105, a predicted life of the target battery is determined based on the predicted life decay curve for each predicted operating condition change information.

In possible embodiments of the present disclosure, in a case where the target battery has not yet been shipped from a factory, the step in which the predicted life of the target battery is determined based on the predicted life decay curve may include: determining a time span in which the battery state of health goes from 100% to a preset state of health in the predicted life decay curve; and taking the duration represented by the time span as the predicted life of the target battery. The preset state of health may, for example, take the value of 80%, but of course may also take other values, which are not limited herein.

In possible embodiments of the present disclosure, in a case where the target battery has been shipped from a factory and applied to a specified vehicle as a power battery, the step in which the predicted life of the target battery is determined based on the predicted life decay curve may include: obtaining the used service life of the target battery; substituting the used service life as an abscissa parameter into the predicted life decay curve to obtain the corresponding ordinate parameter, which is the current predicted state of health of the target battery; determining a time span in which the battery state of health goes from the predicted state of health to a preset state of health in the predicted life decay curve; and taking the duration represented by the time span as the predicted life of the target battery.

It can be seen that in possible embodiments of the present disclosure, the curve segments of different life decay types are spliced end-to-end to obtain the predicted life decay curve of the target battery, thus obtaining the predicted life of the target battery, thereby reducing the prediction error of the battery life.

It is noted that steps 102 to 105 may be implemented by specific code or by a data model such as the Simulink data model in MATLAB, and the specific embodiment of steps 102 to 105 is not limited herein.

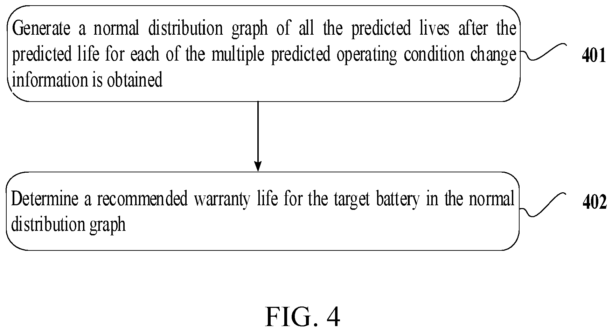

In possible embodiments of the present disclosure, a recommendation function for the warranty life of the target battery may be provided. The function is used to recommend to battery manufacturers regarding the warranty duration (in years) for the target battery. As shown in FIG. 4, after the predicted life of the target battery is determined based on the predicted life decay curve, the method may further include step 401 and step 402.

At step 401, after the predicted life for each of the multiple predicted operating condition change information is obtained, a normal distribution graph of all the predicted lives is generated.

In possible embodiments of the present disclosure, there may be multiple predicted operating condition change information at the same time. For example, 100 predicted operating condition change information exist at the same time, and then based on each predicted operating condition change information, a corresponding predicted life may be obtained. After one respective predicted life is obtained based on each predicted operating condition change information, a normal distribution graph of multiple predicted lives is generated based the multiple predicted lives. The distribution of multiple predicted lives is documented in this normal distribution graph.

At step 402, a recommended warranty life for the target battery is determined in the normal distribution graph.

In possible embodiments of the present disclosure, a recommended warranty life suitable for the target battery is determined based on the distribution of the multiple predicted lives in the normal distribution graph. Battery manufacturers may provide a warranty for the target battery in accordance with this recommended warranty life to make the battery warranty more reasonable.

In possible embodiments of the present disclosure, the step in which the recommended warranty life for the target battery is determined in the normal distribution graph may include the following sub-steps, in which: A confidence interval at a preset confidence level is determined in the normal distribution graph, where the preset confidence level may, for example, take the value of 0.95, and it can be seen that most of the predicted lives are in the confidence interval; a minimum value of the confidence interval is taken as the recommended warranty life for the target battery. For example, the minimum value of the confidence interval is 8 years, and 8 years can be used as the recommended warranty life of the target battery, thus avoiding the loss caused by too long or too short battery warranty duration.

It can be seen that in possible embodiments of the present disclosure, the normal distribution graph of multiple predicted lives is generated, and the recommended warranty life for the target battery is determined in the normal distribution graph, thereby making the battery warranty more reasonable.

In addition, if the target battery has been shipped from a factory and applied to a specified vehicle as a power battery, it is generally not necessary to provide the recommended function for the warranty life of the target battery. At this time, for the case in which there may be multiple predicted operating condition change information at the same time, the predicted life decay curves corresponding to the multiple predicted operating condition change information may be obtained through steps 103 and 104, and then one predicted life decay curve may be selected from the predicted life decay curves corresponding to the multiple predicted operating condition change information. Based on the selected predicted life decay curve, step 105 is performed. The selection rule may be, for example, to take the predicted life decay curve with the largest decay amplitude of battery state of health, among the predicted life decay curves corresponding to the multiple predicted operating condition change information, as the selected predicted life decay curve.

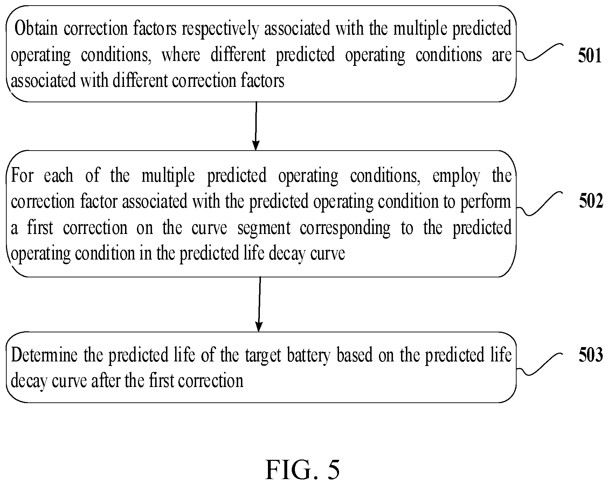

In possible embodiments of the present disclosure, as shown in FIG. 5, the step in which the predicted life of the target battery is determined based on the predicted life decay curve includes step 501, step 502, and step 503.

At step 501, correction factors respectively associated with the multiple predicted operating conditions are obtained, and different predicted operating conditions are associated with different correction factors.

In possible embodiments of the present disclosure, the predicted life decay curve obtained by splicing multiple curve segments may not exactly match the actual life decay curve. For example, compared with the predicted life decay curve, the actual life decay curve may indicate accelerated decay at a part of the curve. Therefore, different correction factors may be set for different life decay types, that is, different predicted operating conditions may be associated with different correction factors in advance, and thus the correction factors are used to correct the predicted life decay curve.

In possible embodiments of the present disclosure, the process of determining correction factors is described. For example, the correction factors may be obtained in a pre-test phase of the target battery, and in the pre-test phase, the battery data processing method may further include steps 1 through 7 as described below.

At step 1, preset operating condition change information is obtained, the preset operating condition change information includes multiple preset operating conditions ordered in time sequence, and each of the multiple preset operating conditions corresponds to a respective predicted operating condition.

In possible embodiments, in the pre-test phase, the preset operating condition change information may be obtained by manual configuration. Each preset operating condition corresponds to one predicted operating condition, which means that the preset operating condition and the predicted operating condition corresponding to the preset operating condition correspond to one life decay type (for example, working charge/discharge decay, sleeping resting aging decay, power consumption decay or vibration mechanism decay; for another example, working charge/discharge decay at an ambient temperature of 25°C, sleeping resting aging decay at an ambient temperature of 25°C, working charge/discharge decay at an ambient temperature of 45°C or sleeping resting aging decay at an ambient temperature of 45°C) at the same time.

At step 2, for each of the multiple life decay types corresponding to the multiple preset operating conditions, one curve segment is extracted as one preset curve segment from a respective one of the preset life decay curves corresponding to the life decay type, to obtain multiple preset curve segments.

At step 3, the multiple preset curve segments are spliced sequentially end-to-end based on the ordering of the multiple preset operating conditions in the preset operating condition change information, to obtain an expected life decay curve of the target battery under the preset operating condition change information, and the splicing points of any two adjacent preset curve segments in the expected life decay curve have the same battery state of health.

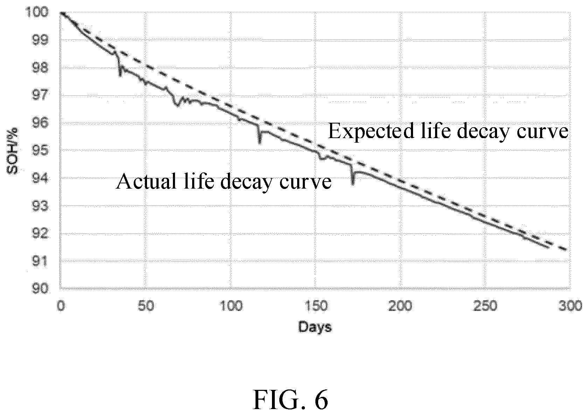

In possible embodiments, the expected life decay curve is generated in a manner similar to the predicted life decay curve, and the difference is that the expected life decay curve is generated based on the preset operating condition change information in the pre-test phase, whereas the predicted life decay curve is generated based on the predicted operating condition change information. Thus, the process of generating the expected life decay curve is not repeated herein. Referring to FIG. 6, an example of the expected life decay curve is illustrated.

At step 4, the target battery is tested based on the preset operating condition change information to obtain an actual life decay curve corresponding to the expected life decay curve.

In possible embodiments, the target battery is tested based on the preset operating condition change information. For example, the actual operating condition environments of the target battery are sequentially changed according to the multiple preset operating conditions ordered in time sequence in the preset operating condition change information, to test the target battery practically, thus obtaining the actual life decay curve. It can be seen that the actual life decay curve is the actual measurement data of the life decay of the target battery. Referring to FIG. 6, an example of the actual life decay curve is illustrated.

At step 5, one or more first curve segments which are one or more of the preset curve segments corresponding to one or more of the multiple life decay types in the expected life decay curve are determined, and one or more second curve segments in the actual life decay curve which are in one-to-one correspondence with the one or more first curve segments are determined. The one or more first curve segments each corresponds to the same life decay type as a corresponding one of the one or more second curve segments.

At step 6, for each first curve segment and its corresponding second curve segment, a correction factor associated with the preset operating condition corresponding to the life decay type corresponding to the first and second curve segments is determined using the first and second curve segments.

At step 7, a correction factor associated with the predicted operating condition corresponding to the preset operating condition is determined based on the correction factor associated with the preset operating condition.

In possible embodiments, the expected life decay curve represents the expected data of the life decay curve of the target battery under the preset operating condition change information, and the actual life decay curve represents the actual measured data of the life decay curve of the target battery under the preset operating condition change information. Therefore, for each preset operating condition in the preset operation condition change information, a correction factor associated with the preset operating condition may be calculated based on the difference between the expected data and the actual measured data. After the correction factor associated with the preset operating condition is obtained, a correction factor associated with a predicted operating condition corresponding to the preset operating condition is determined based on the correction factor associated with the preset operating condition. For example, the correction factor associated with the preset operating condition may be used directly as the correction factor associated with the predicted operating condition corresponding to the preset operating condition.

In possible embodiments, the step in which the correction factor associated with the preset operating condition is determined using the first curve segment and the second curve segment under the life decay type corresponding to the same preset operating condition may include the following sub-steps, in which: the ratio of battery states of health at the same time point in the first curve segment and the second curve segment, which are under the life decay type corresponding to the same preset operating condition, is determined as the ratio corresponding to the time point, because the first curve segment and the second curve segment both record how the battery state of health changes over time; after ratios corresponding to all the time points in the first curve segment and the second curve segment are obtained, the average value of the ratios corresponding to all the time points is determined; and the average value is taken as the correction factor associated with the same preset operating condition.

At step 502, for each of the multiple predicted operating conditions, the correction factor associated with the predicted operating condition is employed to perform a first correction on the curve segment corresponding to the predicted operating condition in the predicted life decay curve.

In possible embodiments of the present disclosure, the first correction may be to multiply the correction factor associated with the predicted operating condition by each battery state of health in the curve segment corresponding to the predicted operating condition in the predicted life decay curve, and thus each battery state of health in the curve segment is corrected, thereby obtaining the curve segment after the first correction.

At step 503, the predicted life of the target battery is determined based on the predicted life decay curve after the first correction.

In possible embodiments of the present disclosure, after the first correction is performed on each curve segment in the predicted life decay curve, the predicted life decay curve after the first correction can be obtained. The predicted life of the target battery may be determined based on the predicted life decay curve after the first correction.

In possible embodiments of the present disclosure, in a case where the target battery has not yet been shipped from a factory, the step in which the predicted life of the target battery is determined based on the predicted life decay curve after the first correction may include: determining a time span in which the battery state of health goes from 100% to a preset state of health in the predicted life decay curve after the first correction; and taking the duration represented by the time span as the predicted life of the target battery.

In possible embodiments of the present disclosure, in a case where the target battery has been shipped from a factory and applied to a specified vehicle as a power battery, the step in which the predicted life of the target battery is determined based on the predicted life decay curve after the first correction may include: obtaining the used service life of the target battery; substituting the used service life as an abscissa parameter into the predicted life decay curve after the first correction to obtain the corresponding ordinate parameter, which is the current predicted state of health of the target battery; determining a time span in which the battery state of health goes from the predicted state of health to a preset state of health in the predicted life decay curve after the first correction; and taking the duration represented by the time span as the predicted life of the target battery.

It can be seen that in possible embodiments of the present disclosure, the correction factors associated with the predicted operating conditions are employed to perform the first correction on the curve segments corresponding to the predicted operating conditions in the predicted life decay curve, which can yield a life decay curve that better aligns with reality. Thus, this enhances the accuracy of the calculated predicted life of the target battery.

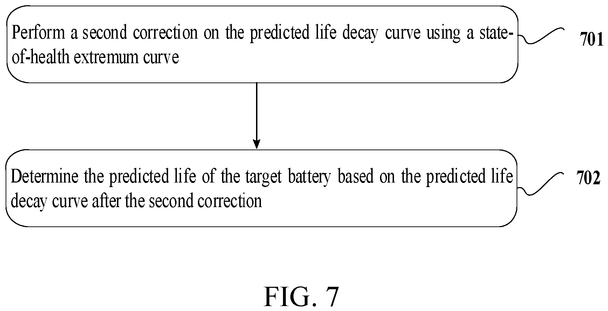

In possible embodiments of the present disclosure, as shown in FIG. 7, the step in which the predicted life of the target battery is determined based on the predicted life decay curve includes step 701 and step 702.

At step 701, a second correction is performed on the predicted life decay curve using a state-of-health extremum curve.

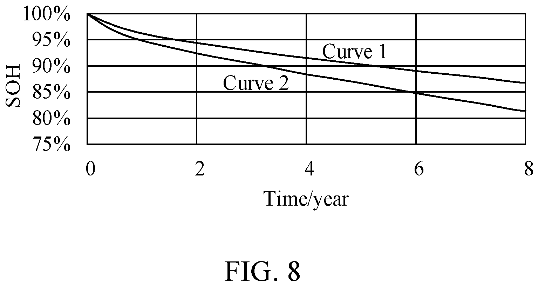

In possible embodiments of the present disclosure, to reduce the error in the predicted life decay curve, the second correction may also be applied to the predicted life decay curve by using a state-of-health extremum curve. The state-of-health extremum curve records extremums of the battery state of health, and the state-of-health extremum curve is used to determine whether the battery state of health in the predicted life decay curve has a large error, and to correct the battery state of health in the predicted life decay curve when the error is large. For example, the state-of-health extremum curve may include at least one of a state-of-health maximum extremum curve or a state-of-health minimum extremum curve. An example of the state-of-health maximum extremum curve is shown as curve 1 in FIG. 8, and an example of the state-of-health minimum extremum curve is shown as curve 2 in FIG. 8.

In possible embodiments of the present disclosure, the process of generating the state-of-health extremum curve is described. For example, the battery data processing method may further include the following steps, in which: Multiple different vehicles of the same model as the vehicle in which the target battery is located are determined; battery pack charging and consumption information of the multiple different vehicles is obtained and actual usage information of the vehicle in which the target battery is located is obtained; a life prediction simulation of the target battery is performed based on the battery pack charging and consumption information of the multiple different vehicles and the actual usage information; and a state-of-health extremum curve of the target battery is determined based on the result obtained from the life prediction simulation.

The battery pack charging and consumption information includes, but is not limited to, the battery pack fast-charging ratio, the battery pack storage state of charge (SOC), and so on. The actual usage information includes, but is not limited to, the actual average monthly driving mileage, the used service life, and so on. It is to be noted that the actual usage information may be obtained according to the online inspection of the battery management system (BMS), or may be obtained by any other means, without limitation herein. The average monthly driving mileage of the vehicle is an example of the above actual usage information, which, in possible embodiments, may be the average quarterly driving mileage of the vehicle, the average annual driving mileage of the vehicle, and so on.

In possible embodiments, the battery pack charging and consumption information of the multiple different vehicles is randomly generated according to a preset target distribution. For example, the process of generating the target distribution may include: obtaining actual charging and consumption information of battery packs of multiple different vehicles, the multiple different vehicles having the same model as the vehicle in which the target battery is located; and performing statistical analysis on the actual charging and consumption information to determine the target distribution satisfied by the actual charging and consumption information of the multiple different vehicles. It can be seen that the target distribution characterizes what distribution pattern the various information in the actual charging and consumption information of battery packs of multiple different vehicles conforms to, respectively.

In possible embodiments, the step in which the life prediction simulation of the target battery is performed based on the battery pack charging and consumption information of the multiple different vehicles and the actual usage information may include: taking the battery pack charging and consumption information of each vehicle and the actual usage information as a set of test data to obtain multiple sets of test data; inputting each set of test data separately into a battery life prediction software to perform battery life prediction simulation, where one battery state-of-health curve can be obtained after each set of test data is simulated by the battery life prediction software; and after obtaining multiple battery state-of-health curves, taking the multiple battery state-of-health curves as the results of the life prediction simulation.

In possible embodiments, the step in which the state-of-health extremum curve of the target battery is determined based on the result obtained from the life prediction simulation may include: selecting the battery state-of-health curve with the largest degree of decline in the battery state-of-health over time from the results of the life prediction simulation, and taking the selected battery state-of-health curve as a state-of-health minimum extremum curve of the state-of-health extremum curve; and selecting the battery state-of-health curve with the smallest degree of decline in the battery state-of-health over time from the results of the life prediction simulation, and taking the selected battery state-of-health curve as a state-of-health maximum extremum curve of the state-of-health extremum curve.

In possible embodiments, the step in which the second correction is performed on the predicted life decay curve by using the state-of-health extremum curve may include the following sub-steps, in which: In a case where the battery state of health on the predicted life decay curve is less than the battery state of health on the state-of-health minimum extremum curve at the same time point, the battery state of health on the predicted life decay curve is modified to the battery state of health at the corresponding time point on the state-of-health minimum extremum curve; in a case where the battery state of health on the predicted life decay curve is greater than the battery state of health on the state-of-health maximum extremum curve at the same time point, the battery state of health on the predicted life decay curve is modified to the battery state of health at the corresponding time point on the state-of-health maximum extremum curve; and in a case where the battery state of health on the predicted life decay curve is less than or equal to the battery state of health on the state-of-health maximum extremum curve at the same time point and is greater than or equal to the battery state of health on the state-of-health minimum extremum curve at the same time point, the battery state of health at the corresponding time point on the predicted life decay curve remains unchanged.

At step 702, the predicted life of the target battery is determined based on the predicted life decay curve after the second correction.

In possible embodiments of the present disclosure, in a case where the target battery has not yet been shipped from a factory, the step in which the predicted life of the target battery is determined based on the predicted life decay curve after the second correction may include: determining a time span in which the battery state of health goes from 100% to a preset state of health in the predicted life decay curve after the second correction; and taking the duration represented by the time span as the predicted life of the target battery.

In possible embodiments of the present disclosure, in a case where the target battery has been shipped from a factory and applied to a specified vehicle as a power battery, the step in which the predicted life of the target battery is determined based on the predicted life decay curve after the second correction may include: obtaining the used service life of the target battery; substituting the used service life as an abscissa parameter into the predicted life decay curve after the second correction to obtain the corresponding ordinate parameter, which is the current predicted state of health of the target battery; determining a time span in which the battery state of health goes from the predicted state of health to a preset state of health in the predicted life decay curve after the second correction; and taking the duration represented by the time span as the predicted life of the target battery.

In possible embodiments of the present disclosure, the step in which the predicted life of the target battery is determined based on the predicted life decay curve after the second correction may further include: performing the first correction on the predicted life decay curve after the second correction, and then determining the predicted life of the target battery based on the predicted life decay curve that undergoes the second correction first and then the first correction. Similarly, the step in which the predicted life of the target battery is determined based on the predicted life decay curve after the first correction may include: performing the second correction on the predicted life decay curve after the first correction, and then determining the predicted life of the target battery based on the predicted life decay curve that undergoes the first correction first and then the second correction. The specific steps for calculating the predicted life are not described here.

It can be seen that in possible embodiments of the present disclosure, the second correction is applied to the predicted life decay curve by using the state-of-health extremum curve, thereby reducing the error in the predicted life decay curve and improving the accuracy of the calculated predicted life of the target battery.

In a second aspect, based on the battery data processing method, the present disclosure provides a battery data processing apparatus. The battery data processing apparatus is configured to perform any of the steps of the battery data processing method. For example, the battery data processing apparatus may include a first acquisition module, a second acquisition module, a segment extraction module, a segment splicing module, and a life determination module.

The first acquisition module is configured to obtain preset life decay curves of a target battery under multiple different life decay types.

The second acquisition module is configured to obtain one or more predicted operating condition change information of the target battery. Each predicted operating condition change information includes multiple predicted operating conditions ordered in time sequence, and the multiple predicted operating conditions are in one-to-one correspondence with the multiple life decay types.

The segment extraction module is configured to extract, for each of the multiple life decay types corresponding to the multiple predicted operating conditions in each predicted operating condition change information, one curve segment from a respective one of the preset life decay curves corresponding to the life decay type, to obtain multiple curve segments.

The segment splicing module is configured to sequentially splice the multiple curve segments end-to-end, based on the ordering of the multiple predicted operating conditions in each predicted operating condition change information, to obtain a predicted life decay curve of the target battery for each predicted operating condition change information. The splicing points of any two adjacent curve segments in the predicted life decay curve have the same battery state of health.

The life determination module is configured to determine a predicted life of the target battery based on the predicted life decay curve for each predicted operating condition change information.

In a third aspect, the present disclosure provides an electronic device. The electronic device includes a processor and a memory storing a computer program. The computer program is configured to be executed by the processor to implement the battery data processing method of any one of the above possible embodiments.

In a fourth aspect, the present disclosure provides a computer storage medium. The computer storage medium stores a computer program. The computer program is configured to be executed by a processor to implement any of the above battery data processing methods.

In a fifth aspect, the present disclosure provides a computer program product or a computer program. The computer program product or the computer program includes a computer instruction, and the computer instruction is stored in a computer-readable storage medium. The processor of the electronic device reads the computer instruction from the computer-readable storage medium and executes the computer instruction such that the electronic device implements any of the above battery data processing methods.

## Claims

1. A battery data processing method, **characterized by** comprising:
obtaining (101) preset life decay curves of a target battery under a plurality of different life decay types;
obtaining (102) one or more predicted operating condition change information of the target battery, wherein each predicted operating condition change information comprises a plurality of predicted operating conditions ordered in time sequence, and the plurality of predicted operating conditions are in one-to-one correspondence with the plurality of life decay types;
extracting (103), for each of the plurality of life decay types corresponding to the plurality of predicted operating conditions in each predicted operating condition change information, one curve segment from a respective one of the preset life decay curves corresponding to the life decay type, to obtain a plurality of curve segments;
sequentially splicing (104) the plurality of curve segments end-to-end, based on the ordering of the plurality of predicted operating conditions in each predicted operating condition change information, to obtain a predicted life decay curve of the target battery for each predicted operating condition change information, splicing points of any two adjacent curve segments in the predicted life decay curve having a same battery state of health; and
determining (105) a predicted life of the target battery based on the predicted life decay curve for each predicted operating condition change information.

2. The battery data processing method according to claim 1, wherein a plurality of the predicted operating condition change information is provided, and after the predicted life of the target battery is determined (105) based on the predicted life decay curve for each predicted operating condition change information, the method further comprises:
generating (401), after obtaining the predicted life for each of the plurality of predicted operating condition change information, a normal distribution graph of all the predicted lives; and
determining (402) a recommended warranty life for the target battery in the normal distribution graph.

3. The battery data processing method according to claim 2, wherein the determining (402) of the recommended warranty life for the target battery in the normal distribution graph comprises:
determining a confidence interval at a preset confidence level in the normal distribution graph; and
taking a minimum value of the confidence interval as the recommended warranty life for the target battery.

4. The battery data processing method according to claim 1, wherein the determining (105) of the predicted life of the target battery based on the predicted life decay curve for each predicted operating condition change information comprises:
obtaining (501) correction factors respectively associated with the plurality of predicted operating conditions, the different predicted operating conditions being associated with the different correction factors;
employing (502), for each of the plurality of predicted operating conditions, the correction factor associated with the predicted operating condition, to perform a first correction on the curve segment corresponding to the predicted operating condition in the predicted life decay curve; and
determining (503) the predicted life of the target battery based on a predicted life decay curve after the first correction.

5. The battery data processing method according to claim 4, wherein the battery data processing method further comprises:
obtaining preset operating condition change information, the preset operating condition change information comprising a plurality of preset operating conditions ordered in time sequence, each of the plurality of preset operating conditions corresponding to a respective one of the plurality of predicted operating conditions;
extracting, for each of the plurality of life decay types corresponding to the plurality of preset operating conditions, one curve segment as one preset curve segment from a respective one of the preset life decay curves corresponding to the life decay type, to obtain a plurality of preset curve segments;
sequentially splicing the plurality of preset curve segments end-to-end, based on the ordering of the plurality of preset operating conditions in the preset operating condition change information, to obtain an expected life decay curve of the target battery under the preset operating condition change information, splicing points of any two adjacent preset curve segments in the expected life decay curve having a same battery state of health;
testing the target battery based on the preset operating condition change information to obtain an actual life decay curve corresponding to the expected life decay curve;
determining one or more first curve segments which are one or more of the preset curve segments corresponding to one or more of the plurality of life decay types in the expected life decay curve and determining one or more second curve segments in the actual life decay curve which are in one-to-one correspondence with the one or more first curve segments, the one or more first curve segments each corresponding to a same life decay type as a corresponding one of the one or more second curve segments;
determining, for each first curve segment and its corresponding second curve segment, a correction factor associated with the preset operating condition corresponding to the life decay type corresponding to the first and second curve segments by using the first and second curve segments; and
determining a correction factor associated with the predicted operating condition corresponding to the preset operating condition, based on the correction factor associated with the preset operating condition.

6. The battery data processing method according to claim 5, wherein the determining of, for each first curve segment and its corresponding second curve segment, the correction factor associated with the preset operating condition corresponding to the life decay type corresponding to the first and second curve segments by using the first and second curve segments comprises:
determining, for each same time point in the first and second curve segments, a ratio of battery states of health at the time point in the first curve segment and the second curve segment corresponding to the life decay type, and taking the ratio of battery states of health at the same time point as a ratio corresponding to the time point;
after obtaining ratios corresponding to all the time points in the first curve segment and the second curve segment, determining an average value of the ratios corresponding to all the time points; and
taking the average value as the correction factor associated with the preset operating condition.

7. The battery data processing method according to claim 1, wherein the battery data processing method further comprises:
determining a plurality of vehicles of a same model as a vehicle in which the target battery is located;
obtaining battery pack charging and consumption information of the plurality of vehicles and actual usage information of the vehicle in which the target battery is located;
performing a life prediction simulation of the target battery based on the battery pack charging and consumption information of the plurality of vehicles and the actual usage information; and
determining a state-of-health extremum curve of the target battery based on a result obtained from the life prediction simulation;
wherein the determining (105) of the predicted life of the target battery based on the predicted life decay curve for each predicted operating condition change information comprises:
performing (701) a second correction on the predicted life decay curve using the state-of-health extremum curve; and
determining (702) the predicted life of the target battery based on a predicted life decay curve after the second correction.

8. The battery data processing method according to any one of claims 1 to 7, wherein the obtaining (102) of the one or more predicted operating condition change information of the target battery comprises:
determining a plurality of vehicles of a same model as a vehicle in which the target battery is located;
obtaining historical operating condition change information of battery packs of the plurality of vehicles;
performing statistical analysis on the historical operating condition change information of the battery packs of the plurality of vehicles to determine a preset distribution satisfied by the historical operating condition change information of the battery packs of the plurality of vehicles; and
randomly generating the predicted operating condition change information based on the preset distribution.

9. An electronic device, **characterized by** comprising a processor and a memory storing a computer program, wherein the computer program is configured to be executed by the processor to implement the battery data processing method of any one of claims 1 to 8.

10. A computer storage medium, **characterized in that** the computer storage medium stores a computer program, and the computer program is configured to be executed by a processor to implement the battery data processing method of any one of claims 1 to 8.
